# EUROPÄISCHE PATENTSCHRIFT

(11) **EP 1 692 757 B1**
(45) Veröffentlichungstag und Bekanntmachung des Hinweises auf die Patenterteilung: **26.09.2007**
(21) Anmeldenummer: 04790832.2
(22) Anmeldetag: 26.10.2004
(51) Int. Cl.: H02M 5/257, H02M 1/12, H02P 7/295

(54) **VORRICHTUNG ZUR LEISTUNGSSTEUERUNG DURCH PHASENANSCHNITT UND VERFAHREN ZUR VERRINGERUNG VON OBERWELLEN**
DEVICE FOR POWER ADJUSTMENT BY PHASE CONTROL AND METHOD FOR REDUCTION OF HARMONIC WAVES
DISPOSITIF POUR COMMANDE DE PUISSANCE A COMMANDE A PHASE ET PROCEDE POUR REDUIRE LES ONDES HARMONIQUES

(30) Priorität: 11.12.2003 DE 10357918
(43) Veröffentlichungstag der Anmeldung: 23.08.2006
(73) Patentinhaber: Kurz, Gerhard, 75382 Althengstett (DE)
(72) Erfinder: KURZ, Gerhard, 75382 Althengstett (DE); SCHULZ, Detlef, 72657 Altenriet (DE)
(74) Vertreter: Lindner, Michael
(86) Internationale Anmeldenummer: PCT/EP2004/012047
(87) Internationale Veröffentlichungsnummer: WO 2005/062455

(56) Entgegenhaltungen:
- EP-A- 0 760 551
- EP-A- 0 859 452
- DE-A1- 2 131 750
- DE-A1- 10 052 910

## Beschreibung

Die vorliegende Erfindung betrifft eine Vorrichtung zur Leistungssteuerung durch Phasenanschnitt einer einen elektrischen Verbraucher versorgenden Wechselspannung und zur Reduzierung von durch den Phasenanschnitt entstehenden Oberwellen bis zu einem Bereich von 4 kHz, vorzugsweise im Bereich der dritten harmonischen Oberwelle, mit einem Elektromotor als Verbraucher, einem in Reihe mit dem Verbraucher liegenden ersten Schaltungselement, das von einer Steuerungseinrichtung zur Ausführung eines Phasenanschnitts angesteuert wird, und einem Widerstandselement. Die Erfindung betrifft ferner ein Verfahren zur Verringerung von Oberwellen im Bereich bis 4 kHz, vorzugsweise im Bereich der dritten harmonischen Oberwelle, bei einer Leistungssteuerung durch Phasenanschnitt.

Eine Vorrichtung und ein Verfahren zur Leistungssteuerung mittels Phasenanschnitt ist beispielsweise aus dem Aufsatz von S. Williamson et al. "Accoustic noise and pulsating torques in a triac-controlled permanent-split-capacitor fan motor", IEE Proceedings, Vol. 128, Pt.B, No. 4, July 1981, Seiten 201-206, oder der Anmeldung DE 198 50 905 A1 oder der Anmeldung EP-A-0 859 452, der Anmelderin bekannt.

Vorrichtungen zum Phasenanschnitt dienen dazu, die einem elektrischen Verbraucher zugeführte Leistung zu steuern, indem der Verbraucher über ein Schaltungselement periodisch ein- und ausgeschaltet wird. Üblicherweise wird als Schaltungselement ein TRIAC eingesetzt, das in Reihe mit dem Verbraucher liegt und über eine Steuerungseinrichtung gezündet wird. Die Steuerungseinrichtung umfasst eine Reihenschaltung aus einem Widerstand und einem Zündkondensator, die parallel zum TRIAC angeordnet ist. Das Zündsignal wird zwischen dem Widerstand und dem Zündkondensator abgegriffen und über eine Reihenschaltung aus einem Widerstand und einem als DIAC ausgebildeten Zündelement dem Steuereingang (Gate) des TRIACS zugeführt. Neben diesen analog ausgeführten Steuerungseinrichtungen sind mittlerweile auch integrierte Schaltungen erhältlich, die diese Ansteuerungsfunktion erfüllen.

Bei der Leistungssteuerung durch Phasenanschnitt der dem Verbraucher zugeführten Wechselspannung entstehen unerwünschte Oberwellen, für die hinsichtlich ihrer Ausprägung europäische Normen bestehen. Diese Normen müssen von den Leistungssteuerungs-Vorrichtungen erfüllt werden, weshalb in den letzten Jahren Lösungen zur Verringerung dieser Oberwellen vorgeschlagen wurden.

Bei der Reduzierung der Oberwellen spielt insbesondere die dritte harmonische Oberwelle eine besondere Rolle, weshalb sich bisherige Lösungen insbesondere auf die Reduzierung dieser dritten Harmonischen konzentriert haben. Ein Beispiel einer Vorrichtung zur Reduzierung der dritten harmonischen Oberwelle ist beispielsweise in EP 0 859 452 B1 der Anmelderin offenbart. Bei der darin gezeigten Lösung wird der Phasenwinkel bzw. Zündwinkel von der Steuerungseinrichtung um einen vorgegebenen Wert herum beispielsweise in aufeinanderfolgenden Vollwellen verändert. Das Ergebnis einer solchen Unsymmetrie im Zündwinkel führt zu nur langsam anwachsenden geradzahligen Harmonischen und stark reduzierten ungeradzahligen Harmonischen.

Obgleich sich dieser Lösungsweg in der Praxis durchaus bewährt hat und sich die bestehenden Normen hiermit ohne weiteres einhalten lassen, bleibt selbstverständlich weiterhin der Wunsch bestehen, eine noch kostengünstigere Lösung aufzufinden. Darüber hinaus wäre eine Vorrichtung wünschenswert, deren Brummen im Bereich von 25 Hz etwas geringer ist als bei der in der vorgenannten Druckschrift gezeigten Vorrichtung.

Vor diesem Hintergrund besteht die Aufgabe der vorliegenden Erfindung darin, eine Vorrichtung zur Leistungssteuerung durch Phasenanschnitt bereitzustellen, die kostengünstig herstellbar ist und darüber hinaus ein besseres Brummverhalten besitzt.

Diese Aufgabe wird bei der Vorrichtung der eingangs genannten Art dadurch gelöst, dass ein zweites Schaltungselement in Reihe mit dem Widerstandselement vorgesehen ist, wobei die Reihenschaltung parallel zu dem ersten Schaltungselement angeordnet liegt, dass die Steuerungseinrichtung derart ausgebildet ist, dass sie das zweite Schaltungselement kurz vor dem ersten Schaltungselement ansteuert und für eine kurze Zeitdauer in den leitenden Zustand schaltet, und dass das Widerstandselement zu dessen Kühlung in einem von dem Elektromotor erzeugten Luftstrom angeordnet ist.

D.h. mit anderen Worten, dass durch das frühere Leitendschalten des zweiten Schaltungselements ein Strom fließt, der nach dem Zünden des eigentlichen ersten Schaltungselements von diesem übernommen wird. Bedingt durch das Widerstandselement ist der durch das zweite Schaltungselement fließende Strom geringer als jener durch das erste Schaltungselement. Insgesamt lässt sich mit Hilfe des zweiten Schaltungselements ein sanfterer Anstieg des Stroms insgesamt erreichen, so dass sich die harmonischen Oberwellen dadurch reduzieren. Insbesondere entstehen durch das Leitendschalten des zweiten Schaltungselements Oberwellen, die beim Zünden des ersten Schaltungselements auftretende Oberwellen teilweise auslöschen. Durch Platzieren des Widerstandselements im Luftstrom des Elektromotors erfolgt eine ausreichende Kühlung, so dass auf zusätzliche Kühlmaßnahmen verzichtet werden kann.

Aufgrund der wenigen zusätzlichen Bauteile, die für die erfindungsgemäße Vorrichtung zur Leistungssteuerung notwendig sind, lassen sich Herstellungskosten einsparen - ohne jedoch die Qualität hinsichtlich der Reduzierung von Oberwellen zu verschlechtern.

Allgemein liegt der Erfindung also der Gedanke zugrunde, vor dem eigentlichen Zündvorgang und dem Leitendschalten des TRIACS einen Strombetrag fließen zu lassen, der kleiner ist als der eigentliche durch das erste Schaltungselement fließende Nennstrom. Dadurch werden - wie erwähnt - weitere zeitlich früher entstehende Harmonische gebildet, die sich mit harmonischen Oberwellen bei der eigentlichen Phasenanschnittsteuerung zumindest teilweise auslöschen.

Es ist bevorzugt, das Widerstandselement in Form von zumindest zwei Widerstandssegmenten bereitzustellen. Vorzugsweise liegen die Widerstandssegmente innerhalb des Elektromotors, so dass sie gut geschützt sind. Die Segmentierung des Widerstandselements in zumindest zwei Segmente hat den Vorteil, dass eine bessere Kühlung möglich ist, da die einzelnen Segmente getrennt voneinander im Luftstrom des Elektromotors angeordnet werden können.

Es ist weiter bevorzugt, das Widerstandselement als Widerstandsdraht auszuführen, was unter Kostengesichtspunkten vorteilhaft ist. Werden mehrere Widerstandssegmente eingesetzt, können diese dann jeweils als Widerstandsdraht ausgebildet sein.

In einer bevorzugten Weiterbildung ist das Widerstandselement als Teil einer Wicklung des Elektromotors (bspw. der Feldwicklung) vorgesehen. So lässt sich das Widerstandselement beispielsweise in Form von mehreren Windungen auf der Motorwicklung aufbringen. Diese Maßnahme ermöglicht ebenfalls eine einfache Herstellung des Widerstandselements, wobei eine gute Kühlung weiterhin gewährleistet ist.

Bevorzugt wird als Schaltungselement ein TRIAC eingesetzt. Es ist weiter bevorzugt, das Widerstandselement als einfachen ohmschen Widerstand auszubilden. Selbstverständlich lassen sich auch andere Widerstandselemente verwenden, beispielsweise induktive oder kapazitive Widerstände. Es hat sich jedoch herausgestellt, dass gerade ohmsche Widerstände hinsichtlich ihrer Baugröße und der Kosten am besten geeignet sind.

Die der Erfindung zugrunde liegende Aufgabe wird auch von einem Verfahren zur Verringerung von Oberwellen im Bereich bis 4 kHz, vorzugsweise der dritten harmonischen Oberwelle, bei einer Leistungssteuerung durch Phasenanschnitt gelöst, wobei das Verfahren die Schritte aufweist:
- Ansteuern eines ersten Schaltungselements, vorzugsweise eines TRIACS, auf der Grundlage eines ersten eingestellten Zündwinkels, um ein Phasenanschnitt-Verfahren auszuführen,
- kurzzeitiges Leitendschalten einer das erste Schaltungselement überbrückenden, mit einem Widerstand behafteten Verbindung unmittelbar vor dem Zünden des ersten Schaltungselements, und
- Kühlen der widerstandsbehafteten Verbindung durch den Elektromotor.

Wie zuvor bereits ausgeführt, wird als mit einem Widerstand behaftete schaltbare Verbindung ein TRIAC eingesetzt, das in Reihe mit einem ohmschen Widerstand parallel zum ersten Schaltungselement liegt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnung näher erläutert. Dabei zeigen:
- Fig. 1: ein schematisches Blockschaltdiagramm einer erfindungsgemäßen Vorrichtung zur Leistungssteuerung,
- Fig. 2: ein Diagramm zur Verdeutlichung der Spannungs- bzw. Stromverläufe, und
- Fig. 3: eine schematische Darstellung eines Elektromotors.

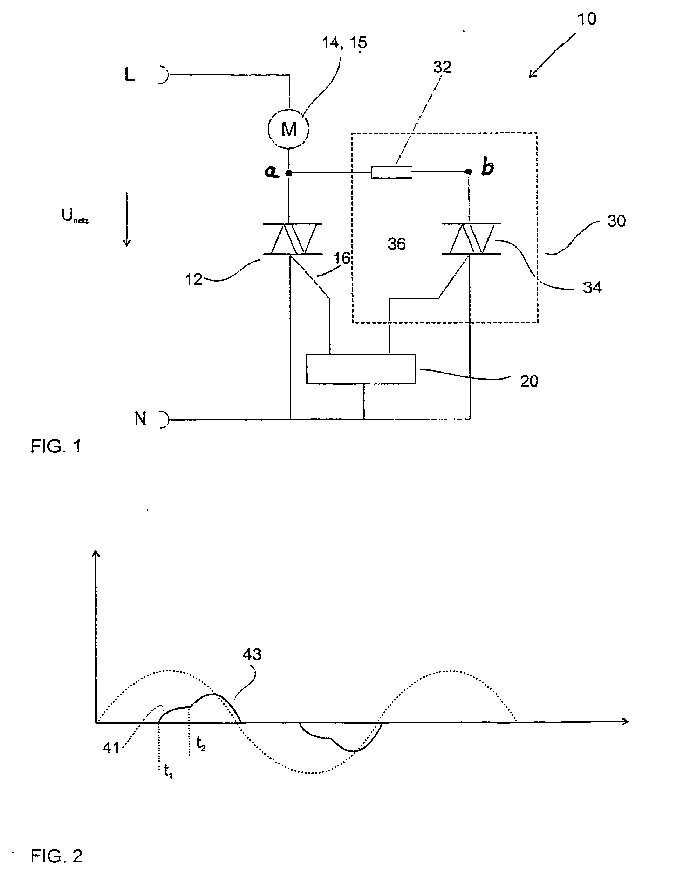

In Fig. 1 ist eine Vorrichtung zur Leistungssteuerung gezeigt und mit dem Bezugszeichen 10 gekennzeichnet. Die Leistungssteuerung erfolgt mittels des Phasenanschnitt-Verfahrens, das hinlänglich bekannt ist und an dieser Stelle nicht nochmals erläutert werden muss.

Zur Ausführung des Phasenanschnitts weist die Vorrichtung 10 einen TRIAC 12 auf, der in Reihe mit dem zu steuernden Verbraucher 14 angeordnet ist. Die Reihenschaltung aus TRIAC 12 und Verbraucher 14 wird von einem Wechselspannungs-Versorgungsnetz U_{netz} gespeist, wobei die beiden Pole mit L und N gekennzeichnet sind.

Bei dem Verbraucher 14 handelt es sich um einen Elektromotor 15, vorzugsweise für einen Staubsauger, der eine induktive Last darstellt.

Der TRIAC 12 ist über seinen Steuereingang (Gate) 16 mit einer Steuerungseinrichtung 20 verbunden, die der gewünschten Leistung entsprechende Zündimpulse erzeugt und dem Steueranschluss 16 zuführt.

Hinter dieser Steuerungseinrichtung 20 kann sich entweder ein diskret aufgebauter Schaltkreis verbergen, der beispielsweise einen Zündkondensator zur Erzeugung des Zündimpulses aufweist. Selbstverständlich kann die Steuerungseinrichtung auch als integrierte Schaltung ausgebildet sein.

Durch Abgabe eines Zündimpulses wird der TRIAC 12 leitend geschaltet, so dass der Verbraucher 14 mit Energie versorgt werden kann. Der TRIAC 12 bleibt bis zum Ende der Halbwelle der Versorgungsspannung leitend und geht dann in den nichtleitenden Zustand über. Durch entsprechende Wahl des Zündzeitpunkts innerhalb einer Halbwelle der Versorgungsspannung kann die Leistung gesteuert werden.

Bei dieser Art der Leistungssteuerung werden Oberwellen erzeugt, die zurück ins Wechselspannungs-Versorgungsnetz wirken. Aufgrund europäischer Normen dürfen diese Oberwellen jedoch bestimmte Beträge nicht überschreiten. Aufgrund dessen ist es notwendig, besondere Vorkehrungen zur Reduzierung dieser Oberwellen zu treffen.

Hierfür ist in der Vorrichtung 10 eine Schaltungseinheit 30 vorgesehen. Dieser Schaltungseinheit 30 kommt die Aufgabe zu, vor dem eigentlichen Zündzeitpunkt einen Strombetrag durch den Verbraucher 14 fließen zu lassen, der kleiner ist als der eigentliche Nennstrom. In Fig. 2 ist dieser Strombetrag mit dem Bezugszeichen 41 gekennzeichnet. Deutlich zu erkennen ist, dass dieser Strombetrag 41 vor dem eigentlichen nach der Zündung des TRIACS 12 fließenden Strom, der mit dem Bezugszeichen 43 gekennzeichnet ist, zu fließen beginnt. Die Zeitdifferenz zwischen dem Zeitpunkt t1 des kleineren Strombetrags 41 und dem Zeitpunkt t2 des Nennstroms 43 beträgt etwa 1-2 ms und kann, abhängig vom Zündwinkel, variieren. Insbesondere kann die Differenz bei sehr kleinen und/oder bei sehr großen Zündwinkeln auf Null gesetzt werden, was dazu führt, dass die Schaltungseinheit 30 wirkungslos bleibt.

Dadurch, dass ein kleiner Strombetrag 41 vor dem eigentlichen Nennstrom 43 fließt, entsteht ein Gesamtstrom durch den Verbraucher 14, dessen Anstieg damit deutlich abgeflacht wird. Diese Abflachung hat die Wirkung, dass die Entstehung von Oberwellen reduziert wird, insbesondere durch destruktive Interferenz der Oberwellen, die dem Strombetrag 41 und dem Nennstrom 43 zuzuordnen sind.

Insgesamt lassen sich durch diese Art der Steuerung gerade die niederen Oberwellen und hier insbesondere die dritte Harmonische reduzieren.

Die Funktion der Schaltungseinheit 30 wird im vorliegenden Ausführungsbeispiel von einer Reihenschaltung aus einem Widerstand 32 und einem TRIAC 34 erzielt, die parallel zu dem TRIAC 12 angeordnet sind. Folglich bildet sich bei leitendem TRIAC 34 ein Strompfad zwischen einem Pol der Versorgungsspannung über den Verbraucher 14, den Widerstand 32 und den TRIAC 34 zum zweiten Pol N. In diesem Fall wird der TRIAC 12 überbrückt.

Die Ansteuerung des TRIACS 34 erfolgt ebenfalls über die Steuerungseinrichtung 20, die Zündimpulse an den Steuereingang 36 (Gate) des TRIACS 34 liefert. Wie bereits erwähnt, wird dieser Zündimpuls zu einem Zeitpunkt t1 erzeugt, der vor dem Zeitpunkt t2 des eigentlichen an den TRIAC 12 gelieferten Zündimpulses liegt. Die entsprechende Differenz t2 - t1 kann beispielsweise fest vorgegeben sein oder kann von der Steuerungseinrichtung 20, abhängig von dem Zündwinkel des Zündimpulses, an den TRIAC 12 eingestellt werden.

Der in der Schaltungseinheit 30 vorgesehene Widerstand 32 ist vorzugsweise als ohmscher Widerstand ausgebildet und sorgt dafür, dass der Strom 41 nicht den Betrag des Nennstroms 43 erreicht. Ein Widerstand im Bereich von beispielsweise 10 Ohm hat sich als besonders günstig herausgestellt.

Wie bereits erwähnt, wird der TRIAC 12 kurz vor seiner Zündung durch die Schaltungseinheit 30 überbrückt, so dass durch den Verbraucher 14 ein Strom fließen kann. Dieser Vorgang wiederholt sich periodisch in jeder Halbwelle der Versorgungsspannung.

Wie zuvor erwähnt, handelt es sich bei dem Widerstand 32 bevorzugt um einen ohmschen Widerstand. Als besonders kostengünstig hat sich hierbei ein einfacher Widerstandsdraht herausgestellt. Um eine gute Platzierung zu erzielen, ist der Widerstandsdraht in Form von zumindest zwei einzelnen voneinander unabhängigen Widerstandsdrahtsegmenten vorgesehen, die miteinander elektrisch verbunden sind.

Da der Widerstand 32 einen sehr geringen Widerstandswert besitzt, fließt ein relativ großer Strom, so dass entsprechend eine hohe Leistung in Form von Wärme erzeugt wird. Um eine Beschädigung des Widerstands zu verhindern, muss dieser deshalb gekühlt werden.

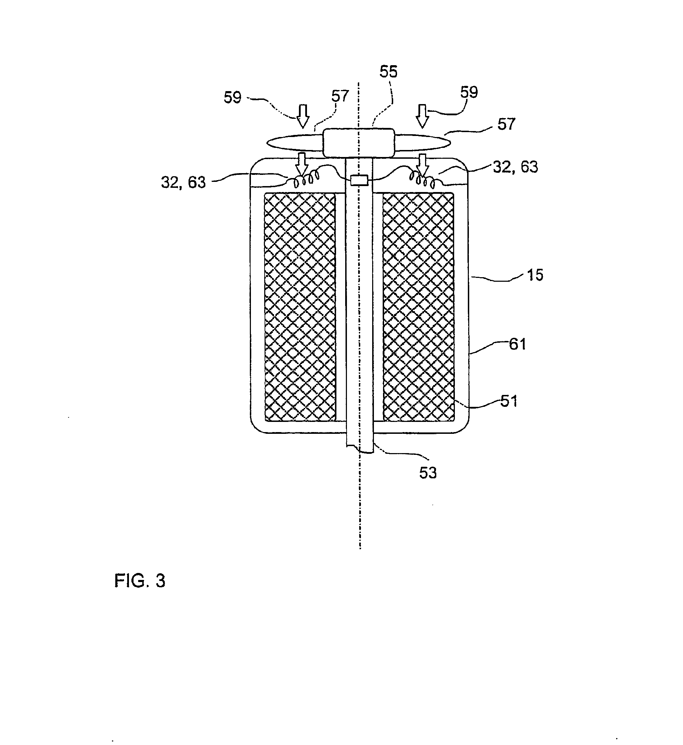

In Fig. 3 ist der Elektromotor 15 in einer Schnittansicht schematisch dargestellt, wobei der Übersichtlichkeit wegen nur die notwendigsten Teile zu sehen sind.

Der Elektromotor 15 umfasst eine Wicklung 51, die dem Antrieb einer Welle 53 dient. An einem Ende der Welle 53 ist ein Lüftungsrad 55 mit Flügeln 57 aufgesetzt. Dieses Lüftungsrad 55 ist mit der Welle 53 fest gekoppelt, so dass es sich mit der Welle 53 dreht. Die Form der Flügel 57 ist so gewählt, dass bei einer solchen Drehung ein Luftstrom erzeugt wird, der in der Figur durch Pfeile 59 angedeutet ist. Im vorliegenden Ausführungsbeispiel wird folglich Luft von dem Lüftungsrad 55 von außen in Richtung der Wicklung 51 geblasen.

Selbstverständlich kann der vom Lüftungsrad 55 erzeugte Luftstrom auch in entgegengesetzter Richtung gewählt werden.

Innerhalb eines Gehäuses 61 des Elektromotors 15 sind mehrere, bspw. vier Widerstandsdrähte 63 vorgesehen, die den zuvor erläuterten Widerstand 32 bilden. Die vier Widerstandsdrähte liegen in Reihe und sind über den vom Luftstrom durchströmten Querschnitt gleichmäßig verteilt angeordnet. Die Widerstandsdrähte werden von außen über zwei Verbindungspunkte a, b angeschlossen. Diese beiden Verbindungspunkte a, b sind auch in Fig. 1 gezeigt. Zu erkennen ist, dass der Verbindungspunkt a mit dem Motor und der Verbindungspunkt b mit dem TRIAC 34 verbunden wird.

Die Widerstandsdrähte 63 liegen, wie aus Fig. 3 deutlich zu erkennen ist, zwischen der Wicklung 51 und dem Lüfterrad 55. Darüber hinaus sind die Widerstandsdrähte 63 innerhalb des Luftstroms 59 platziert, so dass dieser vom Lüftungsrad 55 erzeugte Luftstrom über die Widerstandsdrähte 63 streift.

Mit Hilfe dieses Luftstroms lassen sich die Widerstandsdrähte 63 im Betrieb ausreichend kühlen, so dass weitere Kühlelemente etc. nicht erforderlich sind. Da das Lüfterrad 55 sowieso vorgesehen ist, und zwar zur Kühlung des Elektromotors selbst, sind auch insofern keine zusätzlichen Maßnahmen erforderlich.

Es sei noch angemerkt, dass die Wahl von vier Widerstandsdrähte rein beispielhaft ist. Es versteht sich, dass sowohl mehr als vier Widerstandsdrähte als auch nur ein Widerstandsdraht zum Einsatz kommen können. Vorteilhaft ist allgemein jedoch, den Widerstand 32 zu segmentieren, um eine bessere verteilte Anordnung im Luftstrom zu ermöglichen.

Es zeigt sich damit, dass eine sehr einfache und kostengünstige Lösung zur Kühlung der verwendeten Widerstandsdrähte gefunden wurde.

Es hat sich ferner gezeigt, dass mit einer sehr einfachen und kostengünstigen Schaltungseinheit 30 eine Reduzierung der Oberwellen möglich ist, so dass die geltenden Normen erfüllt werden können. Darüber hinaus wurde festgestellt, dass die bei bisherigen Schaltungseinheiten zur Reduzierung der Oberwellen entstehenden Brummgeräusche deutlich vermindert werden konnten.

## Patentansprüche

1. Vorrichtung zur Leistungssteuerung durch Phasenanschnitt einer einen elektrischen Verbraucher (14) versorgenden Wechselspannung und zur Reduzierung von durch den Phasenanschnitt entstehenden Oberwellen, insbesondere bis zu einem Bereich von 4 kHz, vorzugsweise im Bereich der dritten harmonischen Oberwelle, mit einem Elektromotor (15) als Verbraucher (14), einem in Reihe mit dem Verbraucher (14) liegenden ersten Schaltungselement (12) (TRIAC), das von einer Steuerungseinrichtung (20) zur Ausführung eines Phasenanschnitts angesteuert wird, und einem Widerstandselement (34), **dadurch gekennzeichnet, dass** ein zweites Schaltungselement (34) in Reihe mit dem Widerstandselement (32) vorgesehen ist, wobei die Reihenschaltung parallel zu dem ersten Schaltungselement (12) angeordnet liegt, die Steuerungseinrichtung (20) derart ausgebildet ist, dass sie das zweite Schaltungselement (34) kurz vor dem ersten Schaltungselement (12) ansteuert und für eine kurze Zeitdauer in den leitenden Zustand schaltet, und dass das Widerstandselement (32) zu dessen Kühlung in einem vom Elektromotor (15) erzeugten Luftstrom angeordnet ist.

2. Vorrichtung nach Anspruch 1, **dadurch gekennzeichnet, dass** das Widerstandselement (32) zumindest zwei Widerstandssegmente aufweist, die in Reihe angeordnet sind.

3. Vorrichtung nach Anspruch 2, **dadurch gekennzeichnet, dass** die Widerstandssegmente innerhalb des Elektromotors angeordnet sind.

4. Vorrichtung nach Anspruch 1, **dadurch gekennzeichnet, dass** das Widerstandselement als Widerstandsdraht ausgebildet ist.

5. Vorrichtung nach Anspruch 2 oder 3, **dadurch gekennzeichnet, dass** jedes Widerstandsegment als Widerstandsdraht ausgebildet ist.

6. Vorrichtung nach Anspruch 4, **dadurch gekennzeichnet, dass** der Widerstandsdraht auf einer Wicklung des Elektromotors in Form von zumindest einer Windung vorgesehen ist.

7. Vorrichtung nach einem der vorhergehenden Ansprüche, **dadurch gekennzeichnet, dass** das zweite Schaltungselement (34) ein TRIAC ist.

8. Vorrichtung nach einem der vorhergehenden Ansprüche, **dadurch gekennzeichnet, dass** das Widerstandselement (32) ein ohmscher Widerstand ist.

9. Verfahren zur Verringerung von Oberwellen im Bereich bis 4 kHz, vorzugsweise der dritten harmonischen Oberwelle, bei einer Leistungssteuerung eines Elektromotors durch Phasenanschnitt, mit den Schritten:
- Ansteuern eines ersten Schaltungselements (12) auf der Grundlage eines ersten eingestellten zündwinkels, um ein Phasenanschnitt-Verfahren auszuführen,
- kurzzeitiges Leitendschalten einer das erste Schaltungselement (12) überbrückenden mit einem Widerstand behafteten Verbindung (30; 32, 34) zeitlich vor dem Zünden des ersten Schaltungselements, und
- Kühlen der widerstands behafteten Verbindung durch den Elektromotor.

## Claims

1. An apparatus for power control by phase gating of an AC voltage, which supplies an electrical load (14), and for reduction of harmonics which are created by the phase gating, in particular up to a region of 4 kHz, preferably in the region of the third harmonic, having an electric motor (15) as the load (14), having a first circuit element (12) (TRIAC) which is connected in series with the load (14) and is driven by a control device (20) in order to carry out phase gating, and having a resistance element (34), **characterized in that** a second circuit element (34) is provided in series with the resistance element (32), with the series circuit being arranged in parallel with the first circuit element (12) and with the control device (20) being designed such that it drives the second circuit element (34) shortly before the first circuit element (12) and switches it to the on state for a short time period and **in that** the resistance element (32) is arranged in an air flow which is produced by the electric motor (15) in order to cool it.

2. The apparatus as claimed in claim 1, **characterized in that** the resistance element (32) has at least two resistance segments which are arranged in series.

3. The apparatus as claimed in claim 2, **characterized in that** the resistance segments are arranged within the electric motor.

4. The apparatus as claimed in claim 1, **characterized in that** the resistance element is in the form of a resistance wire.

5. The apparatus as claimed in claim 2 or 3, **characterized in that** each resistance segment is in the form of a resistance wire.

6. The apparatus as claimed in claim 4, **characterized in that** the resistance wire is provided in the form of at least one turn on a winding of the electric motor.

7. The apparatus as claimed in one of the preceding claims, **characterized in that** the second circuit element (34) is a TRIAC.

8. The apparatus as claimed in one of the preceding claims, **characterized in that** the resistance element (32) is a non-reactive resistor.

9. A method for harmonic reduction in the range up to 4 kHz, preferably of the third harmonic, for power control of an electric motor by phase gating, having the following steps:
- a first circuit element (12) is driven on the basis of a first selected trigger angle in order to carry out a phase gating process,
- a connection (30; 32, 34) which bridges the first circuit element (12) and has a resistance is switched on briefly at a time before the triggering of the first circuit element, and
- the connection which has a resistance is cooled by the electric motor.

## Revendications

1. Dispositif pour la commande de puissance par redressement à l'entrée des phases d'une tension alternative alimentant un consommateur (14) électrique et pour la réduction des harmoniques se formant du fait du redressement à l'entrée des phases, en particulier jusqu'à une plage de 4 kHz, de préférence dans la plage de la troisième harmonique supérieure avec un moteur électrique (15) comme consommateur (14), un premier élément de circuit (12) (TRIAC) disposé en série avec le consommateur (14), qui est activé par un dispositif de commande (20) pour l'exécution d'un redressement à l'entrée des phases, et un élément de résistance (34), **caractérisé en ce qu'**un second élément de circuit (34) est prévu en série avec l'élément de résistance (32), le circuit de série étant disposé parallèlement au premier élément de circuit (12), le dispositif de commande (20) étant conçu de telle sorte qu'il active le second élément de circuit (34) juste avant le premier élément de circuit (12) et est commuté pour une courte durée dans l'état conducteur, et **en ce que** l'élément de résistance (32) est disposé pour son refroidissement dans un flux d'air généré par le moteur électrique (15).

2. Dispositif selon la revendication 1, **caractérisé en ce que** l'élément de résistance (32) présente au moins deux segments de résistance qui sont disposés en série.

3. Dispositif selon la revendication 2, **caractérisé en ce que** les segments de résistance sont disposés à l'intérieur du moteur électrique.

4. Dispositif selon la revendication 1, **caractérisé en ce que** l'élément de résistance est conçu comme fil de résistance.

5. Dispositif selon la revendication 2 ou 3, **caractérisé en ce que** chaque segment de résistance est conçu comme fil de résistance.

6. Dispositif selon la revendication 4, **caractérisé en ce que** le fil de résistance est prévu sur un enroulement du moteur électrique se présentant sous la forme d'au moins une spire.

7. Dispositif selon l'une quelconque des revendications précédentes, **caractérisé en ce que** le second élément de circuit (34) est un TRIAC.

8. Dispositif selon l'une quelconque des revendications précédentes, **caractérisé en ce que** l'élément de résistance (32) est une résistance ohmique.

9. Procédé pour la réduction d'harmoniques dans la plage allant jusqu'à 4 kHz, de préférence la troisième harmonique supérieure, dans le cas d'une commande de puissance d'un moteur électrique par redressement à l'entrée des phases, comprenant les étapes suivantes :
- l'activation d'un premier élément de circuit (12) sur la base d'un premier angle d'allumage réglé, afin de mettre en oeuvre un procédé de redressement à l'entrée des phases,
- commutation conductrice de courte durée d'une liaison (30 ; 32, 34) équipée d'une résistance et shuntant le premier élément de circuit (12), antérieure à l'allumage du premier élément de circuit, et
- refroidissement de la liaison équipée de résistance par le moteur électrique.
